**Europäisches Patentamt**

(19) **European Patent Office**

**Office européen des brevets**

(11) Publication number : **0 359 393 B1**

(12) **EUROPEAN PATENT SPECIFICATION**

(45) Date of publication of patent specification :
07.10.92 Bulletin 92/41

(51) Int. Cl.⁵ : **A21C 5/00**, A21C 11/16

(21) Application number : **89308148.9**

(22) Date of filing : **10.08.89**

(54) Apparatus for the formation of a shaped food product.

(30) Priority : **12.08.88 JP 202592/88**

(43) Date of publication of application :
**21.03.90 Bulletin 90/12**

(45) Publication of the grant of the patent :
**07.10.92 Bulletin 92/41**

(84) Designated Contracting States :
**DE FR GB**

(56) References cited :
**EP-A- 0 127 715**
**EP-A- 0 230 368**
**US-A- 4 251 201**

(73) Proprietor : **Kobayashi, Masao**
**413-2, Nittazuka**
**Fukui-shi Fukui-ken (JP)**

(72) Inventor : **Kobayashi, Masao**
**413-2, Nittazuka**
**Fukui-shi Fukui-ken (JP)**

(74) Representative : **Pearce, Anthony Richmond et al**
**MARKS & CLERK Alpha Tower Suffolk Street Queensway Birmingham B1 1TT (GB)**

## Description

This invention relates to an improvement of an apparatus for forming soft food material into globular shape, and more particularly to a simplified apparatus for forming successively food material, extruded in the form of a column, such as dough, soft rice cake, soft candy, ground meat, minced meat and mashed potato, into globular shape wherein a second food material is available to be introduced as a core. This invention benefits the confectionery industry or process food industry in a large scale.

The inventor pioneered a new mass production apparatus for such food, and U.S. Patent No. 4,398,881 describes a technique involving the supply of a pair of crawler belt means (cut and roll up system by crawler belt) by which a globular shape and wrapped food product is completed smoothly. Such apparatus has enjoyed a good reputation through the confectionery and process food industry world as a way of mass producing shaped food products.

The above mentioned apparatus, however, has such a high production rate that it tends to be inconvenient for the smaller user in that, if large orders cannot be secured, the apparatus lies idle for long periods.

In order to mitigate this problem, Japanese Publication No. 40-27293 and also EP-A- 127715 disclose an apparatus which acts on a column of food material by movement of two piece cutters having circumferential areas of cam shape. Whilst such an apparatus adopts a simple and automatic cutting method, relative rotary movement of the cam shapes leads to scattering of the food material because of impact load and frictional forces arising as a result of this cutting procedure, clogging of cutters by the food material, and also scratching or scoring of the completed food product during cutting.

As a countermeasure for these problems, the speed of rotation of the food material supply should be equal to that of the said cam cutters when the food material is extruded in the form of column, whereby the satisfactory shape is obtainable. However, this damages greatly the nature of the food material because of the high fluidity friction forces set up, leading to severe deterioration in the taste and quality of the food.

In order to overcome these problems as well as overproduction by the cut and roll up system by the crawler belt means of U.S. Patent No. 4,398,881, it is an object of this invention to provide an apparatus for the formation of a shaped food product suitable for the smaller user.

This invention has the other object to provide an apparatus for the formation of a shaped food product with a high and genuine quality as if it were made by the expert hands of reliable craftsman.

It has a further object to supply an apparatus for the formation of a shaped food product in a simple mechanism and at low cost for operation by a small factory.

According to the present invention there is provided an apparatus for the formation of a shaped food product comprising:

a) forming and cutting means having a lower pair of horizontally opposed spiral disc cutters and an upper pair of horizontally opposed spiral disc cutters, each of said disc cutters having a circumferential spiral blade portion with a cutting edge which is relatively sharp at the maximum radius end and relatively blunt at the minimum radius end, the disc cutters of each pair being rotatable and being mutually disposed so that they are in frictional contact each time the maximum radius ends face each other, the pairs of disc cutters being arranged symmetrically about a passage for food material;

b) means for rotating the disc cutters and for causing the disc cutters to revolve orbitally as a unit about the passage, the arrangement being such that as the disc cutters are rotated the passage is opened and closed; and

c) extruder means adapted to extrude food material in the form of a column into the passage from above.

In the accompanying drawings:-

Fig. 1 is a diagrammatic elevational view of an apparatus, with parts omitted for clarity, for forming a shaped food product according to the present invention;

Fig. 2 is a partially cutaway view showing a gear drive mechanism of disc cutters used in the apparatus of Fig. 1;

Fig. 3 is a part sectional elevational view in greater detail of the apparatus of Fig. 1;

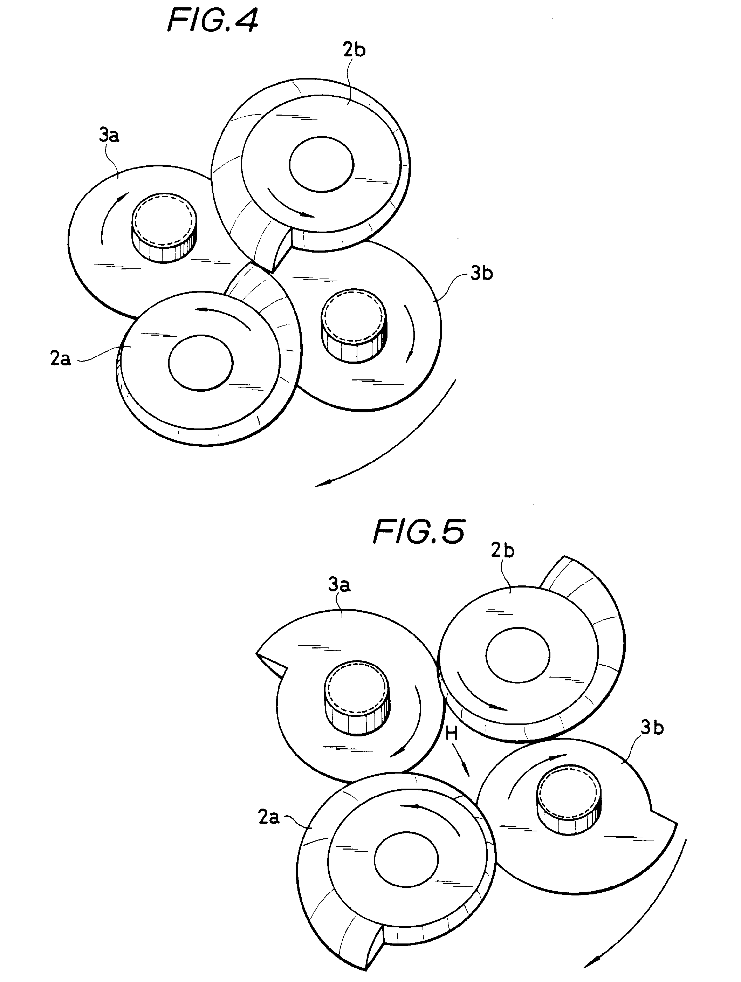

Fig. 4 and Fig. 5 are perspective views showing the shape and interrelationship of the disc cutters;

Figs. 6 to 14 are explanatory views showing the production process of an "ANHABUTAE" product, wherein

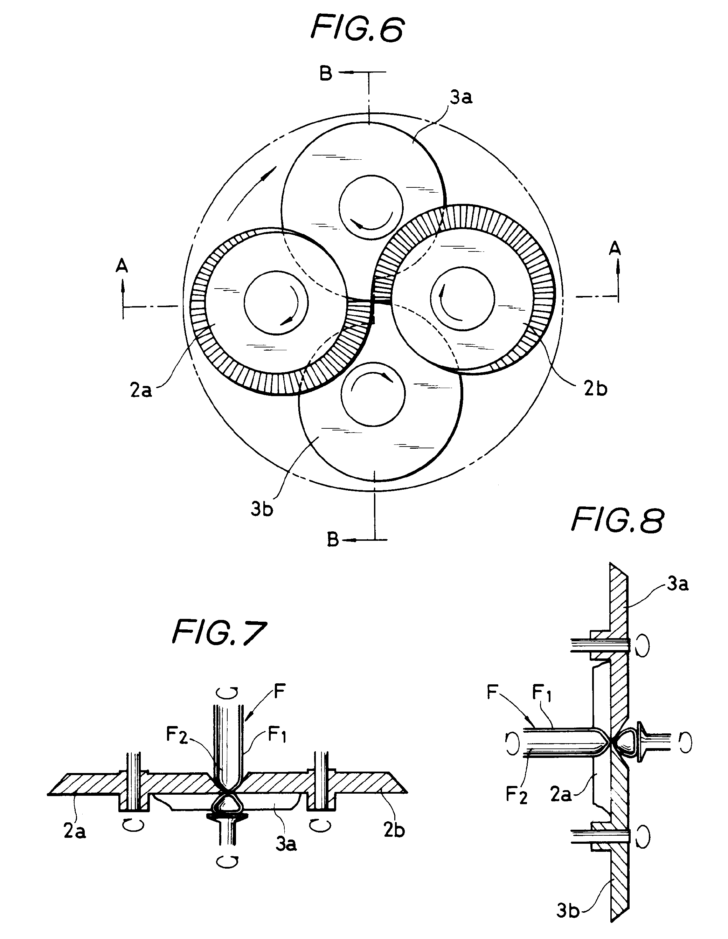

Fig. 6 is a plan view of a spiral disc cutter in the situation immediately after the first food has been cut down and separated,

Fig. 7 is a cross sectional view on the line A-A of Fig. 6,

Fig. 8 is a cross sectional view on the line B-B of Fig. 6,

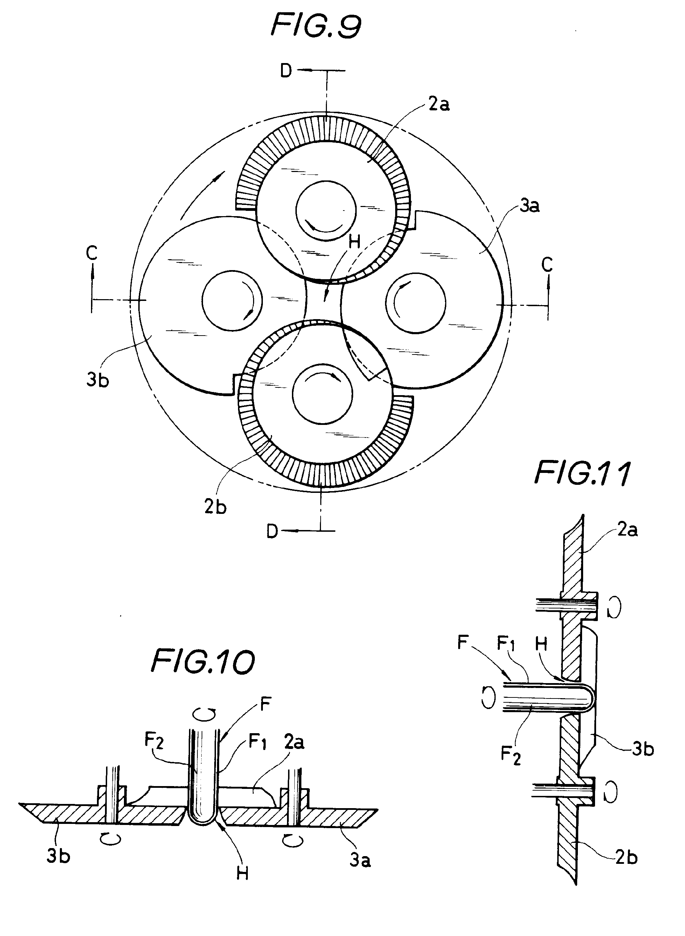

Fig. 9 is a plan view of a spiral disc cutter showing the formation of passage portions wherein food material passes,

Fig. 10 is a cross sectional view on the line C-C of Fig. 9,

Fig. 11 is a cross sectional view on the line D-D of Fig. 9,

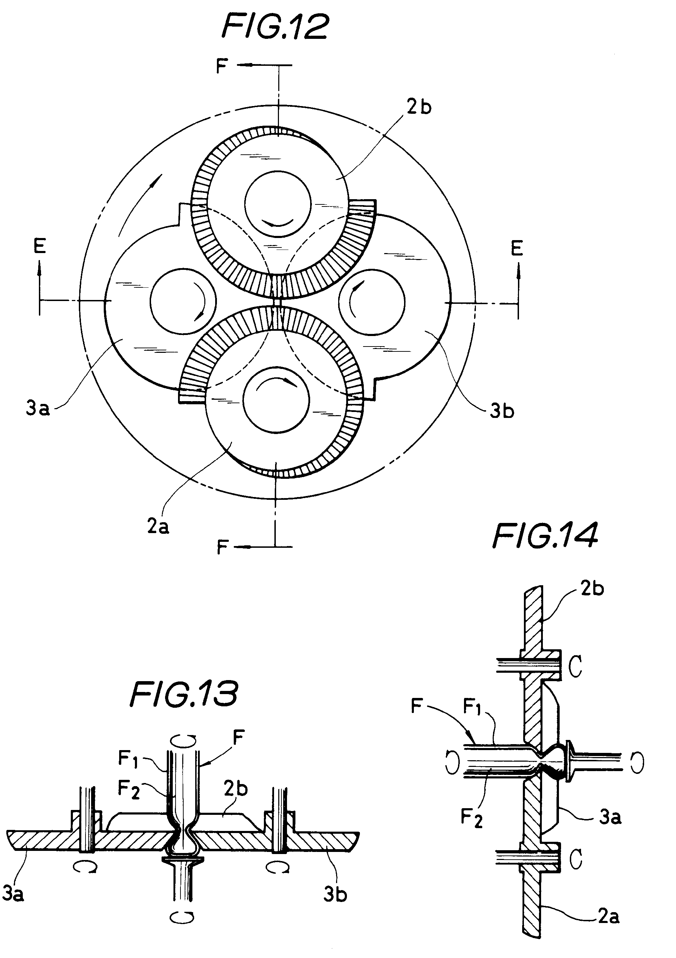

Fig. 12 is a plan view of a spiral disc cutter showing the very instant at which food material is cut down by narrowing the diameter of the passage portions,

Fig. 13 is a cross sectional view taken on the line E-E of Fig. 12;

Fig. 14 is a cross sectional view on the line F-F of Fig. 12,

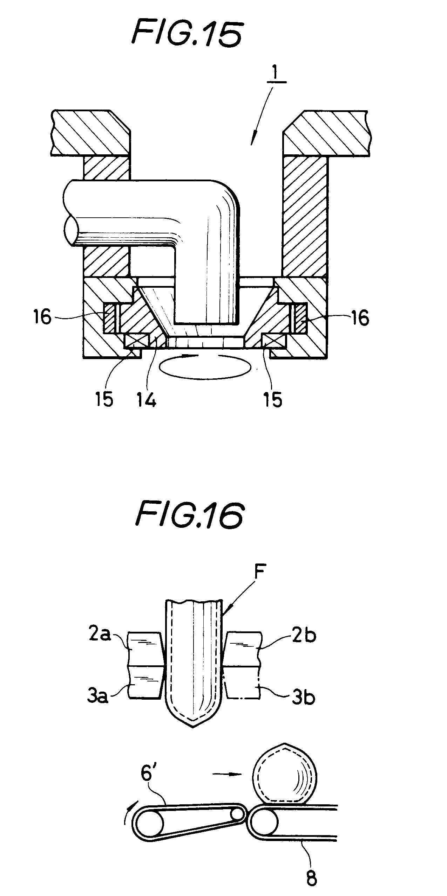

Fig. 15 is a partially sectional elevational view of a different embodiment showing a rotary member defining the discharge orifice of an extruder; and

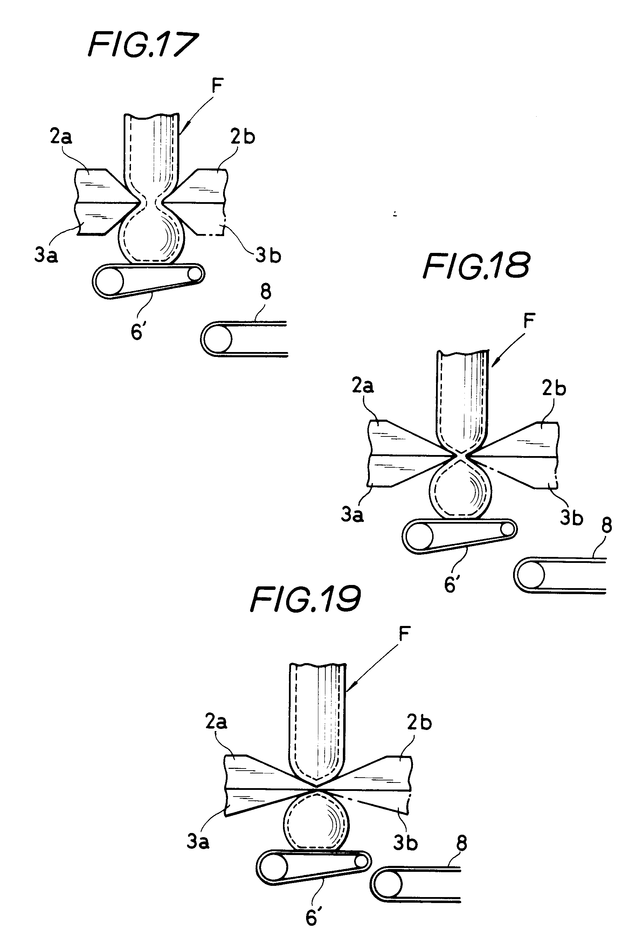

Figs. 16 to 19 are partially cutaway views showing the movement of an elevating conveyor as a different example of an elevational receiver.

Referring to the drawings, numeral 1 shows an extruder which forms a column of food material (F) from first food material (F1) fed from first hopper (11) and second food material (F2) fed from second hopper (12) via gear pumps (13a and 13b). The food material (F2) is co-extruded within the food material F1. This extruder is substantially the same as that disclosed in U.S. Patent No. 4,398,881, and will not be described in detail herein.

Numerals 2a, 2b and the numerals 3a, 3b show pairs of spiral disc cutters having peripheral blade portions. Each of these cutters has a radius which increases gradually so that the periphery of each cutter lies on an involute or spiral line. The peripheral edge of one of the major surfaces of each cutter is chamfered over the majority of its length so as to define a relatively sharp edge at the maximum radius part with the angle of chamfer increasing progressively so that a region adjacent the smaller radius end of the spiral becomes relatively blunt.

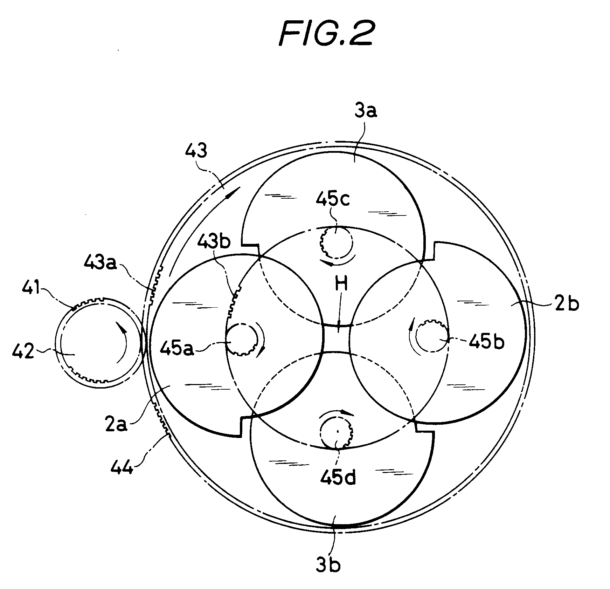

The opposite major surface of the cutters 2a, 2b are planar and face those of the cutters 3a, 3b and are arranged in partly overlapping abutment with the latter. The cutters 2a, 2b, 3a and 3b are mounted so as to be rotatable about respective axes which are equiangularly spaced apart about the vertical axis of extrusion of the food material F, the cutters 2a, 2b being disposed in a plane above that in which the cutters 3a, 3b are disposed. Each cutter 2a, 2b, 3a, 3b is rotated in use about its respective axis in the direction of the arrow illustrated therewith (see for example Fig. 2). All of the cutters 2a, 2b, 3a and 3b can revolve as a unit about the vertical axis of extrusion in the direction of the longer arrow (see the top left hand part of Fig. 2). The cutters 2a, 2b, 3a and 3b are so mounted that, during rotation thereof relative to one another, at any instant the radius of that part of the peripheral blade portion of each cutter which lies closest to the extrusion axis is the same for all cutters.

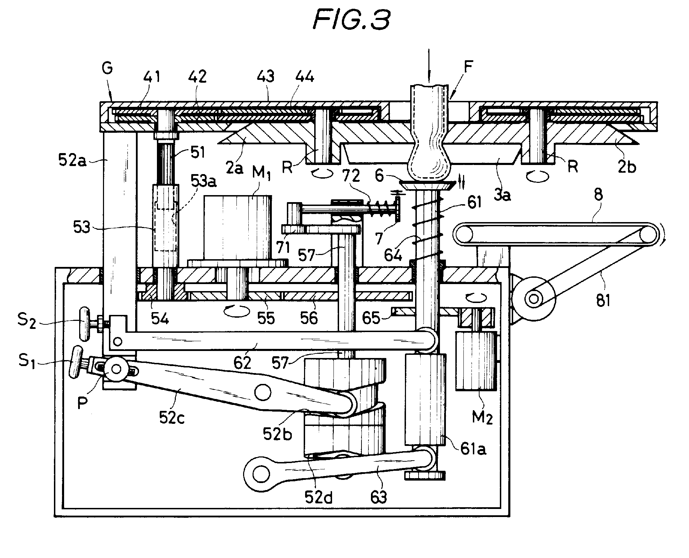

The cutters are driven by a planetary gear drive mechanism as shown in Fig. 2 and Fig. 3.

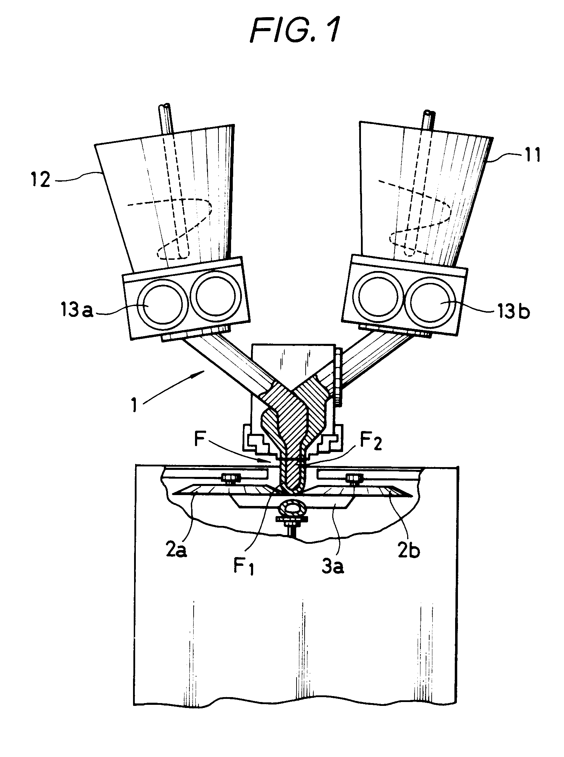

In Fig. 1 and Fig. 3, for clear understanding and observation, some disc cutters are not shown.

The planetary gear drive mechanism is housed inside a relatively thin gear box housing (G).

The planetary gear drive mechanism comprises :

A large pinion (41) and a small pinion (42) rotated by a splined shaft (51);

A sun gear (43) having an outer gear portion (43a) meshing with said large pinion (41) and also having an inner gear portion (43b);

An orbital motion gear (44) meshing with the said small pinion (42) and destined to rotate slightly faster than the said sun gear (43) by the rotation of the small pinion (42); and

Planet gears 45a, 46b, 45c, 45d) with rotational axes (R.R.R and R.) mounted in equiangularly spaced relationship around the axis of said orbital motion gear (44). Each of said planet gears (45a, 45b, 45c and 45d) is destined to be rotated about its own axis (R) as a result of being in mesh with the inner gear portion (43b) of the sun gear (43).

Each planet gear is secured to a respective one of the cutters so that rotation of the planet gear causes rotation of the respective cutter. When each planet gear (45a, 45b, 45c and 45d) starts to rotate and perform orbital movement, the disc cutters (2a, 2b, 3a and 3b) open or close passage portion (H) in the centre areas of orbital revolution movement in accordance with the radius changes in blade portions of said disc cutters. Additionally, those parts of each pair of opposed blade portions which are acting at any instant on food material in the passage portion (H) move in opposite directions.

Just below gear housing box (G) of the said planetary gear drive mechanism, a vertically reciprocable rod (52a) is provided for moving the said gear box (G) up and down whilst maintaining its horizontal disposition. The rod (52a) is movable by a lever (52c) in correspondence with the rotation of a cam (52b). The splined shaft (51) which drives the two pinions (41 and 42) is fitted, with free sliding movement, in a splined internal cylindrical surface (53a) formed in a drive sleeve (53). A gear wheel 54 is fixed to the bottom end of the drive sleeve (53). The gear wheel (54) is connected with a gear (55) mounted on the drive shaft of a first motor (M1).

In other words, the rotation and orbital revolution movement of disc cutters (2a, 2b, 3a and 3b.) are caused by the following movements in turn; operation of first motor (M1) causes rotary movement of gear (55) first, splined cylindrical surfaces (53a) of drive sleeve (53) secondly, and splined shaft (51) finally, while elevational movement is imparted to rod (52a) via cam (52b) and lever (52c), whereupon the splined shaft (51) slides vertically in the sleeve (53). The rotation of the cam (52b) is synchronized with the planetary gear drive mechanism by the rotation of shaft (57) via a subordinate gear (56) connecting with the gear (55) of the first motor (M1).

The numeral 6 shows a vertically movable receiver which accepts globular food material formed by rotation and orbital revolution of the said disc cutters (2a, 2b, 3a and 3b.) The receiver (6) is also synchronized with such movement. The receiver (6) is mounted on a vertically reciprocable rod (61) connected with the said rod (52a) via a linkage (652) so as to move synchronously with rod (52a). In an example of this embodiment, a member (61a) is formed at the bottom end of the rod (61). The bottom end of the said member (61a) is operated by an oscillatable lever (63) acted upon by cam (52d) driven by shaft (57) which receives the transmissional power of the said first motor (M1), whereas the rod (61) is pushed down further by the said linkage (62). Numeral 64 shows a spring which biasses the receiver (6) resiliently upwardly, while numeral 65 indicates a rotary gear fixed on the circumference of the rod (61) and serving to rotate it, and thereby the receiver (6), at a fixed speed from a second motor (M2).

The numeral 7 shows a pusher rod which works to push across the receiver (6) when the latter descends. The rod (7) is driven from the shaft (57) via a cam follower (71) engaged by a cam formed on the upper end of the shaft (57). Numeral 72 indicates a spring which biasses the rod (7) resiliently to the right as viewed in Fig. 3.

The numeral 8 is a conveyor which transports globular food material pushed off the receiver (6) by the rod (7) to the required place. This conveyor (8) is driven by the second motor (M2) via belt pulley (81).

The vertical stroke of the rod (52a) can be regulated by the adjustment of a regulating screw (S1) on working point (P) of the lever (52c). A regulating screw (S2) on the rod (52a) enables the angle between the rod (52a) and the linkage (62) and also between the linkage (62) and the rod (61) to be varied so that the distance between the receiver (6) and disc cutters 2a, 2b, 3a and 3b) can be correctly adjusted.

While one embodiment of the present invention has been shown and described, it is to be clearly understood that the present invention is not limited thereto but may be otherwise modified within the scope of the appended claims. For example, as shown in Fig. 15, a rotary member (14) defines a discharge orifice of the extruder (1) and is supported on a bearing (15). The member (14) is externally toothed and is rotated at substantially the same speed as that of the orbital revolution of the disc cutters (2a, 2b, 3a, 3b.), by means of a timing belt (16) so that the frictional force or influence by centrifugal force of the cutters on the food material (F) is largely eliminated. In another example, as shown in Figs 16 to 19, a vertically reciprocable conveyor (6') is used in place of the receiver (6) so that globular food material is carried away quite smoothly.

Now, with reference to Figs. 6 to 14, the preferred embodiment is explained.

This embodiment procuces "ANHABUTAE", a Japanese soft rice cake containing white bean jam. In other words, soft rice cake is used as wrapping food material (F1) while white bean jam is used as inside core food material (F2).

Figs. 6 to 8 show the situation just after the completion of formation of an "ANHABUTAE" when passage (H) is closed completely. In this position, the maximum radius ends of the blade portions of each pair of opposed disc cutters are in frictional contact with each other and are, of course, moving in mutually opposite directions.

In the meantime, the food material to form the next "ANHABUTAE" is waiting in the passage (H) in the following condition;

    a) inside core food material (F2) is wrapped and sealed by wrapping food material (F1) by the movement of the disc cutters (2a, 2b, 3a, 3b);

    b) the blade portions of each of the upper and lower cutters lie opposite and contact each other at an acute angle.

As the disc cutters (2a, 2b, 3a, 3b.) continue their rotation and orbital revolution as shown in Figs 9 to 11, the inwardly directed peripheral edge of each disc cutter starts to reduce its radius and the relatively blunt portion of the peripheral edge becomes exposed. This results in the passage (H) opening and the food material entering from the extruder (1).

Then, as shown in Figs 12 to 14, the radii of the exposed (or inwardly directed) parts of the blade portions increases and become sharper so that cross-sectional area of the passage gets smaller, the disc cutters (2a, 2b, 3a, 3b) cutting down the food material (F) gradually by squeezing method. In this procedure, the wrapping food material (F) is wrapped around the inside core food material (F2) completely.

As the disc cutters (2a, 2b, 3a, 3b) finish their cyclical movement, the situation returns to exactly the same condition as shown in Figs. 6 to 8, to complete the formation of another "ANHABUTAE".

So far, the preferred embodiment of this invention has been explained, and it adopts upper and lower pairs of oppositely disposed spiral disc cutters, wherein each cutter rotates about its own axis while the cutters perform orbital movement as a body, and wherein the said orbital revolution can control the speed of the rotary movement of the individual disc cutters. Therefore, production loss such as scatter of cut out food material by centrifugal force is correctly avoided.

Moreover, the two pairs of the spiral disc cutters properly open or close the passage in the centre areas of the orbital revolution movement in good timing whereby the proper cutting of food material is performed smoothly just before coming into the passage. Even when the disc cutters are rotated and orbited at high speed, it does not cause any scatter of food material at all, and therefore high speed production is also available by this invention.

As described so far, this invention realises an apparatus for the formation of a shaped food product of fine and high grade in a constant manner effectively. The apparatus of this invention is not required to be operated at high speed and so is suitable for relatively low volume production where necessary.

## Claims

1. An apparatus for the formation of a shaped food product comprising:
   a) forming and cutting means having a lower pair of horizontally opposed spiral disc cutters (3a,3b) and an upper pair of horizontally opposed spiral disc cutters (2a,2b), each of said disc cutters having a circumferential spiral blade portion with a cutting edge which is relatively sharp at the maximum radius end and relatively blunt at the minimum radius end, the disc cutters of each pair being rotatable and being mutually disposed so that they are in frictional contact each time the maximum radius ends face each other, the pairs of disc cutters being arranged symmetrically about a passage (H) for food material (F);
   b) means for rotating the disc cutters and for causing the disc cutters to revolve orbitally as a unit about the passage, the arrangement being such that as the disc cutters are rotated the passage is opened and closed; and
   c) extruder means (1) adapted to extrude food material in the form of a column into the passage from above.

2. An apparatus as claimed in Claim 1, wherein means are provided for vertically reciprocating the disc cutters in synchronism with the rotation and orbital movement of the latter.

3. An apparatus as claimed in claim 1 or 2, wherein a vertically reciprocable receiver (6) is provided under the disc cutters for receiving the completed food material.

4. An apparatus as claimed in claim 3, wherein pushing means (7) are provided for urging the completed food material from the said receiver onto a conveyor (6′), said pushing means being driven in synchronism with vertical reciprocation of the receiver.

5. An apparatus as claimed in Claim 1 or 2, wherein a vertically reciprocable conveyor is provided below the disc cutters for receiving the completed food material conveying it out of the passage.

6. An apparatus as claimed in any preceding claim, wherein the extruder has an outlet orifice defined by a rotary member (14) driven to rotate in synchronism with orbital movement of the disc cutters thereby to decrease frictional contact between the completed food material and the disc cutters.

## Patentansprüche

1. Vorrichtung zum Formen von geformten Nahrungsmittelprodukten, die aufweist:
   a) eine Form- und Schneideinrichtung mit einem unteren Paar von horizontal gegenüberstehenden Spiralscheiben-Schneidwerkzeugen (3a, 3b) und einem oberen Paar von horizontal gegenüberstehenden Spiralscheiben-Schneidwerkzeugen (2a, 2b), wobei jedes Scheiben-Schneidwerkzeug einen Umfangs-Spiralmesserteil mit einer Schneide hat, die an dem Ende mit maximalem Radius relativ scharf und an dem Ende mit minimalem Radius relativ stumpf ist, wobei die Scheiben-Schneidwerkzeuge jedes Paars drehbar und relativ zueinander so angeordnet sind, daß sie jedesmal, wenn die Enden mit maximalem Radius einander zugewandt sind, in Reibungskontakt sind, wobei die Paare von Scheiben-Schneidwerkzeugen symmetrisch um einen Durchgang (H) für Nahrungsmittelgut (F) angeordnet sind;
   b) eine Einrichtung, die die Scheiben-Schneidwerkzeuge dreht und bewirkt, daß diese als eine Einheit auf einer Bahn um den Durchgang herum umlaufen, wobei die Anordnung so ist, daß der Durchgang geöffnet und geschlossen wird, während die Scheiben-Schneidwerkzeuge gedreht werden;
   c) und eine Extrudiereinrichtung (1), die so ausgebildet ist, daß sie Nahrungsmittelgut in Form einer Säule von oben in den Durchgang extrudiert.

2. Vorrichtung nach Anspruch 1, wobei Einrichtungen vorgesehen sind, um die Scheiben-Schneidwerkzeuge synchron mit der Drehung und Bahnumlaufbewegung der Scheiben-Schneidwerkzeuge vertikal hin- und herzubewegen.

3. Vorrichtung nach Anspruch 1 oder 2, wobei unter den Scheiben-Schneidwerkzeugen ein vertikal hin- und herbewegbarer Aufnehmer (6) vorgesehen ist, um das fertige Nahrungsmittelgut aufzunehmen.

4. Vorrichtung nach Anspruch 3, wobei Schiebeeinrichtungen (7) vorgesehen sind, um das fertige Nahrungsmittelgut von dem genannten Aufnehmer auf einen Förderer (6′) zu schieben, wobei die Schiebeeinrichtungen synchron mit der vertikalen Hin- und Herbewegung des Aufnehmers angetrieben werden.

5. Vorrichtung nach Anspruch 1 oder 2, wobei ein vertikal hin- und herbewegbarer Förderer unter den Scheiben-Schneidwerkzeugen angeordnet ist, um das fertige Nahrungsmittelgut aufzunehmen und aus dem Durchgang zu fördern.

6. Vorrichtung nach einem der vorhergehenden Ansprüche, wobei die Extrudiereinrichtung eine Auslaßöffnung hat, die von einem Drehelement (14) definiert ist, das so angetrieben wird, daß es sich synchron mit der Bahnumlaufbewegung der Scheiben-Schneidwerkzeuge dreht, um dadurch den Reibungskontakt zwischen dem fertigen Nahrungsmittelgut und den Scheiben-Schneidwerkzeugen zu verringern.

## Revendications

1. Appareil pour la fabrication d'un produit alimentaire façonné, comprenant :
   a) un moyen de façonnage et de coupe comprenant une paire inférieure de dispositifs de coupe (3a, 3b) en forme de disque en spirale opposés en direction horizontale et une paire supérieure de dispositifs de coupe (2a, 2b) en forme de disque en spirale opposés en direction horizontale, chacun desdits dispositifs de coupe en forme de disque possédant une portion circonférentielle en forme de lame en spirale munie d'un bord coupant qui est relativement aiguisé à l'extrémité à rayon maximal et relativement émoussé à l'extrémité à rayon minimal, les dispositifs de coupe de chaque paire en forme de disque étant rotatifs et disposés l'un par rapport à l'autre de telle sorte qu'ils se trouvent en contact de friction chaque fois que les extrémités à rayon maximal se font mutuellement face, les paires des dispositifs de coupe en forme de disque étant arrangées en position symétrique par rapport à un passage (H) destiné à une matière alimentaire (F);
   b) des moyens destinés à faire tourner les dispositifs de coupe en forme de disque et destinés à faire en sorte que les dispositifs de coupe en forme de disque effectuent des révolutions orbitales à la manière d'une unité autour du passage, l'arrangement étant tel qu'au cours de la rotation des dispositifs de coupe en forme de disque, le passage s'ouvre et se ferme; et
   c) un moyen d'extrusion (1) conçu pour extruder de la matière alimentaire sous la forme d'une colonne dans le passage à partir du haut.

2. Appareil selon la revendication 1, dans lequel on procure un moyen destiné à imprimer aux dispositifs de coupe en forme de disque, un mouvement de va-et-vient vertical en synchronisation avec la rotation et le mouvement orbital de ces derniers.

3. Appareil selon la revendication 1 ou 2, dans lequel on procure un dispositif de réception (6) apte à effectuer un mouvement vertical de va-et-vient, en dessous des dispositifs de coupe en forme de disque, pour la réception de la matière alimentaire terminée.

4. Appareil selon la revendication 3, dans lequel on procure des moyens de poussée (7) pour presser la matière alimentaire terminée depuis ledit dispositif de réception sur un transporteur (6'), ledit moyen de poussée étant entraîné en synchronisation avec le mouvement vertical de va-et-vient du dispositif de réception.

5. Appareil selon la revendication 1 ou 2, dans lequel on procure un transporteur apte à effectuer un mouvement vertical de va-et-vient en dessous des dispositifs de coupe en forme de disque, pour la réception de la matière alimentaire terminée et pour son transport à l'écart du passage.

6. Appareil selon l'une quelconque des revendications précédentes, dans lequel l'extrudeuse possède un orifice de sortie défini par un élément rotatif (14) entraîné pour tourner en synchronisation avec le mouvement orbital des dispositifs de coupe en forme de disque, afin d'ainsi réduire le contact de friction entre la matière alimentaire terminée et les dispositifs de coupe en forme de disque.

# FIG. 1

## FIG.2

FIG.3

*FIG.4*

2b

3a

2a

3b

*FIG.5*

3a

2b

H

2a

3b

FIG.6

FIG.8

FIG.7

## FIG.9

## FIG.11

## FIG.10

*FIG.12*

*FIG.14*

*FIG.13*

## FIG.15

## FIG.16

## FIG.17

## FIG.18

## FIG.19